Europäisches Patentamt

European Patent Office

Office européen des brevets

(19)

(11) EP 0 604 861 B1

(12) **EUROPÄISCHE PATENTSCHRIFT**

(45) Veröffentlichungstag und Bekanntmachung des Hinweises auf die Patenterteilung:
**28.05.1997 Patentblatt 1997/22**

(51) Int. Cl.$^6$: **B01J 20/12**, A01K 1/015

(21) Anmeldenummer: **93120464.8**

(22) Anmeldetag: **18.12.1993**

(54) **Verfahren zur Herstellung von Sorptionsmitteln auf smektitbasis zur Aufnahme von Flüssigkeiten**

Process for the preparation of an absorbent based on smectite for retaining fluids

Procédé pour la préparation d'un absorbant à base de smectite pour le recueil de liquides

(84) Benannte Vertragsstaaten:
**AT DE DK ES FR GB GR IT NL SE**

(30) Priorität: **21.12.1992 DE 4243390**

(43) Veröffentlichungstag der Anmeldung:
**06.07.1994 Patentblatt 1994/27**

(73) Patentinhaber: **SÜD-CHEMIE AG**
**D-80333 München (DE)**

(72) Erfinder:
• **Dr. Hähn, Reinhard**
  **D-84186 Vilsheim (DE)**

• **Dr. Haubensak, Otto**
  **D-83098 Brannenburg (DE)**

(74) Vertreter: **Reitzner, Bruno, Dr. et al**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
EP-A- 0 424 001          GB-A- 704 495
US-A- 2 079 854          US-A- 3 158 579

Printed by Rank Xerox (UK) Business Services
2.14.6/3.4

**Beschreibung**

Die Erfindung betrifft ein Verfahren zur Herstellung von Sorptionsmitteln auf Smektitbasis zur Aufnahme von Flüssigkeiten. Diese Sorptionsmittel sind zur Aufnahme beliebiger Flüssigkeiten geeignet; sie eignen sich aber insbesondere als Streumittel für Heimtiere, weshalb sich die nachfolgenden Ausführungen insbesondere auf dieses Anwendungsgebiet beziehen.

Die Heimtierhaltung in einer weitgehend verstädterten Umwelt ist in zunehmendem Maß mit der Verwendung von Streumaterialien verbunden. Diese haben die Aufgabe, die von den Tieren abgegebenen Flüssigkeiten aufzusaugen und dabei möglichst die Geruchsentwicklung zu hemmen oder zu verhindern. Sie sollen ferner den halbfesten, feuchten tierischen Exkrementen und Ausscheidungen Feuchtigkeit entziehen, um damit die Geruchsentwicklung zu vermindern. Gute Streumaterialien haben darüberhinaus die Eigenschaft, die abgegebenen oder entzogenen Flüssigkeiten unter Bildung eines kompakten Klumpens aufzunehmen, der in einfacher und sparsamer Weise entfernt werden kann. Eine optimale Tierstreu hat somit ein hohes Saugvermögen.

Die auf dem Markt anzutreffenden Produkte sind einmal organische Substanzen, wie Stroh, Sägemehl, Holzspäne, Rinden, poröse Kunststoffperlen, geshreddertes Papier, Cellulosefasern, Agrarabfälle, Polyacrylate usw.; diese werden allein oder in Mischungen mit anorganischen Materialien eingesetzt. Der Nachteil der organischen Streumaterialien ist oftmals die nicht zufriedenstellende Klumpenbildung bzw. ihre Konsistenz sowie ihre Neigung zur bakteriellen Zersetzung, insbesondere im Zusammenwirken mit Feuchtigkeit.

Aus der DE-A-38 36 345 ist eine Tierstreu aus einem körnigen, porösen, adsorbierenden Material, insbesondere im wesentlichen aus Calciumsilicathydrat bestehenden Material, wie Gasbeton bekannt, die zur Verhinderung des Entstehens unangenehmer Gerüche mit mindestens einer antimikrobiell wirksamen Substanz ausgerüstet ist. Smektitische Tonminerale werden nicht verwendet.

Aus der DE-C-38 25 905 ist die Verwendung eines mineralischen Stoffes zum Aufsaugen von toxischen Flüssigkeiten, Emulsionen oder Suspensionen bekannt. Der mineralische Stoff aus Tonmineralen der Gruppe Kaolinit, Illit, Serizit und/oder Smektit und wurde bei Temperaturen oberhalb 650 °C gebrannt. Er weist eine offene Porosität von mindestens 30 Vol.-% und eine mittlere Porengröße von 0,05 bis 500 µm auf. Eine Behandlung zur Erhöhung der Wasseraufnahmefähigkeit ist bei den hochgebrannten Tonmineralen nicht möglich.

Aus der EP-A-0 087 001 sind Sorptionsmittelgranulate bekannt, die Tonmineralteilchen im Bereich von 710 µm bis 4 mm enthalten, wobei die Teilchen durch Kompaktieren von getrockneten kleineren Teilchen mit einer Größe von weniger als 2 mm hergestellt sind. Es finden sich keine Angaben über die Verbesserung der Wasseraufnahmefähigkeit durch Verknetung im feuchten Zustand.

Weiterhin sind z.B. aus den US-A-5 000115 und 4 657881 bzw. aus den EP-A-0 378 421 und 0 424 001 Streumaterialien auf Bentonitbasis bekannt, die gegenüber den organischen Streumaterialien gewisse Vorteile haben. Durch die Fähigkeit zur Quellung mit wäßrigen Flüssigkeiten sind Bentonite in der Lage, Klumpen zu bilden. Wegen dieser Klumpenbildung kann der mit Flüssigkeit benetzte Anteil des Streumaterials separat entfernt werden, wodurch Streumaterial eingespart werden kann. Mit der besonderen Struktur der Bentonite ist auch die Fähigkeit zur Adsorption von störenden Gerüchen verbunden, die bei den tierischen Ausscheidungen und Exkrementen entstehen. Bentonite lassen sich weiterhin leicht umweltverträglich entsorgen.

Nach dem vorstehend genannten Stand der Technik werden u.a. Natriumbentonite bzw. Mischungen aus Natriumbentoniten und Calciumbentoniten als Sorptionsmittel, z.B. als Streumaterial für Heimtiere verwendet. Diese Sorptionsmittel können in granulierter Form eingesetzt werden.

Es handelt sich hierbei jedoch nur um mechanische Gemische, deren Wasseraufnahmefähigkeit das arithmetische Mittel aus den Wasseraufnahmefähigkeiten der Einzelkomponenten darstellt.

Es wurde nun überraschenderweise gefunden, daß die Wasseraufnahmefähigkeit derartiger Gemische erheblich verbessert werden kann, wenn die Bestandteile unter gewissen Bedingungen miteinander chemisch umgesetzt werden.

Die Erfindung betrifft somit ein Verfahren zur Herstellung von Sorptionsmitteln auf Smektitbasis zur Aufnahme von Flüssigkeiten, das dadurch gekennzeichnet ist, daß man (a) einen Smektit mit einer Wasseraufnahmefähigkeit von weniger als 115 % (bezogen auf den getrockneten Smektit mit einem Restwassergehalt von 6 Gew.-%) und einem Smektitgehalt von etwa 40 bis 65 Gew.-% und/oder (b) ein Zweischichtsilicat im feuchten Zustand mit einem Alkalismektit durch intensive Scherung vermischt und homogenisiert, die Mischung schonend trocknet und die getrocknete Mischung zerkleinert.

Die Energieaufnahme beim Verkneten beträgt im allgemeinen 2 bis 10, vorzugsweise 3 bis 6 kWh/to Knetgemisch.

Die Trocknung erfolgt vorzugsweise dadurch, daß man das zu trocknende Material mit nicht mehr als 150°C, vorzugsweise mit nicht mehr als 120°C belastet und den Restwassergehalt nicht unter 4 Gew.-%, vorzugsweise nicht unter 6 Gew.-% einstellt.

Aufgrund dieser Behandlung wird die Wasseraufnahmefähigkeit des Sorptionsmittels größer, als nach der arithmetischen Berechnung der Wasseraufnahmefähigkeiten der Einzelkomponenten zu erwarten ist; es liegt also ein Synergie-Effekt vor. Besonders überraschend ist die Tatsache, daß die Erhöhung der Wasseraufnahmefähigkeit auch bei

2

Verwendung eines Zweischichtsilicats, wie Kaolin, erreicht wird, der im Gegensatz zu Smektiten, wie Calciumbentonit, durch eine Alkalibehandlung im bekannten Sinn nicht aktiviert werden kann.

Vorzugsweise geht man von einem Erdalkali-Smektit, insbesondere von einem Ca-Smektit mit einer Wasseraufnahmefähigkeit (bezogen auf den getrockneten Smektit mit einem Restwassergehalt von 6 Gew.-%) von mindestens etwa 50 %, vorzugsweise von 60 bis 130 %, insbesondere von 90 bis 120 %, aus.

Vorzugsweise beträgt das Mischungsverhältnis zwischen dem Erdalkalismektit und/oder dem Zweischichtsilicat einerseits und dem Alkalismektit etwa 9:1 bis 1:9, insbesondere 7:3 bis 3:7.

Vorzugsweise geht man von einem Zweischichtsilicat aus der Gruppe der Kaoline aus, welches eine Wasseraufnahmefähigkeit von etwa 40 bis 80 Gew.-% (bezogen auf den getrockneten Kaolin mit einem Restwassergehalt von 6 Gew.-%) aufweist.

Nach einer weiteren bevorzugten Ausführungsform verwendet man einen Alkalismektit, der überwiegend Na-Ionen als austauschbare Kationen enthält und der eine Wasseraufnahmefähigkeit von mindestens etwa 200 % (bezogen auf einen Restwassergehalt von 6 Gew.-%) aufweist.

Der Smektit (a) hat vorzugsweise eine Wasseraufnahmefähigkeit von weniger als 100 % (bezogen auf den getrockneten Smektit mit einem Restwassergehalt von 6 Gew.-%) und einen Smektitgehalt von 50 bis 60 Gew.-%.

Nach einer weiteren bevorzugten Ausführungsform wird das Ausgangsgemisch bei einem Wassergehalt von etwa 20 bis 40 % in einem scherenden Aggregat (z.B. einem Bedeschi-Mischer oder einem Ziegelpreßaggregat der Firma Händle) intensiv verknetet oder in einem schnellaufenden Mischaggregat (z.B. in einem Intensivmischer der Firma Eirich) durch intensive Scherung vermischt und homogenisiert.

Eine weitere Optimierung der Flüssigkeitsaufnahme kann dadurch erreicht werden, daß man das getrocknete Produkt auf eine Korngröße von etwa 0,1 bis 10 mm, vorzugsweise von 1 bis 5 mm, einstellt. Die beim Zerkleinern entstehenden Feinanteile werden in üblicher Weise abgesiebt und in die Knetvorrichtung zurückgeleitet.

Gegenstand der Erfindung ist ferner ein Sorptionsmittel, das nach dem vorstehend beschriebenen Verfahren erhältlich ist und das durch einen Wassergehalt von etwa 3 bis 12, vorzugsweise von 4 bis 10 % (nach dem Trocknen) und eine Wasseraufnahmefähigkeit von mehr als 120 %, vorzugsweise von mehr als 150 % (bezogen auf das bis auf einen Restfeuchtigkeitsgehalt von 6 Gew.-% getrocknete Material) gekennzeichnet ist.

Das erfindungsgemäße Sorptionsmittel kann ferner mit an sich bekannten Sorptionsmitteln, z.B. den vorstehend angegebenen organischen Sorptionsmitteln, verschnitten werden. Weiterhin kann das Sorptionsmittel Weißpigmente, Desinfektionsmittel und/oder Tierakzeptanzien enthalten.

Gegenstand der Erfindung ist ferner die Verwendung des vorstehend angegebenen Sorptionsmittels als Packungsmaterial, Aufsaugmittel für Flüssigkeiten (z.B. Körperflüssigkeiten, Öl, flüssige Chemikalien) sowie als Streumaterial für Heimtiere, insbesondere als Katzenstreu.

Der Wassergehalt des erfindungsgemäßen Sorptionsmittels wird wie folgt bestimmt:

10 g Sorptionsmittel werden in einer flachen Schale auf 0,01 g genau eingewogen und im Trockenschrank bei 110°C bis zur Gewichtskonstanz getrocknet (mindestens 2 Stunden). Anschließend läßt man die Probe im Exsikkator auf Raumtemperatur abkühlen und wiegt aus:

Auswertung:

$$\frac{\text{Einwaage - Auswaage}}{\text{Einwaage}} \times 100 = \text{Wassergehalt (\%)}$$

Die Wasseraufnahmefähigkeit des erfindungsgemäßen Sorptionsmittels wird nach der Methode der Firma Westinghouse (Nr. 17-A) ermittelt (vergl. Industrial Minerals, August 1992, Seite 57). Hierbei wird das bis auf einen Restwassergehalt von 6 Gew.-% getrocknete Sorptionsmittel in einen kegeligen Behälter aus feinem Drahtgewebe (lichte Maschenweite 0,25 mm = 60 mesh, Durchmesser 7 cm, Höhe 7,6 cm) eingewogen (Einwaage E = 20 g). Anschließend wird das Gesamtgewicht ( Drahtgewebe + Einwaage E = $E_1$ in g ) ermittelt. Das gefüllte Gewebe wird 20 Minuten in eine mit Wasser gefüllten Glasschale derart eingehängt, daß das Sorptionsmittel vollständig untertaucht. Nach 20 Minuten nimmt man das Drahtgewebe aus dem Wasser und läßt es 20 Minuten abtropfen. Unmittelbar danach wird das Gewicht des Behälters mit Inhalt ermittelt ($E_2$ in g). Die Auswertung wird wie folgt durchgeführt:

$$\text{Wasseraufnahme in Prozent} = \frac{E_2 - E_1}{E} \times 100$$

Die Erfindung ist durch die nachstehenden Beispiele in nicht einschränkender Weise erläutert.

<u>Beispiel 1 (Vergleich)</u>

Etwa 2 kg grubenfeuchter Calciumbentonit (etwa 30 Gew.-% Wasser) werden in einem Knetwerk mit Scherwirkung (Werner-Pfleiderer-Mischer) 5 Minuten intensiv geknetet. Die Energieaufnahme beträgt 4 kWh/to. Die erhaltenen agglomerierten Granulate werden schonend bei etwa 80°C 4 Stunden getrocknet und bei einem Wassergehalt von etwa 6 Gew.-% auf eine Korngröße von 1 - 5 mm zerkleinert.

<u>Beispiel 2 (Vergleich)</u>

Die Arbeitsweise von Beispiel 1 wird mit der Abweichung wiederholt, daß statt des grubenfeuchten Calciumbentonits Kaolin mit einem Wassergehalt von etwa 24 Gew.-% verwendet wird. Die Wasseraufnahme der getrockneten und zerkleinerten Granulate beträgt 74 %.

<u>Beispiel 3 (Vergleich)</u>

Die Arbeitsweise von Beispiel 1 wird mit der Abweichung wiederholt, daß statt des grubenfeuchten Calciumbentonits natürlicher Natriumbentonit mit einem Wassergehalt von etwa 35 % verwendet wird. Die Wasseraufnahmefähigkeit der getrockneten und zerkleinerten Granulate betrug in einem ersten Versuch 273 Gew.-% und in einem zweiten Versuch 291 Gew.-%.

<u>Beispiel 4</u>

Die Arbeitsweise von Beispiel 1 wird mit der Abweichung wiederholt, daß Mischungen von Calcium- und Natriumbentonit mit den in Beispiel 1 bzw. 3 angegebenen Wassergehalten verwendet werden. Die Mischungsverhältnisse sowie die an den Mischgranulaten gemessenen Wasseraufnahmefähigkeiten sind in Tabelle 1 den rechnerisch zu erwartenden Werten gegenübergestellt.

<u>Beispiel 5</u>

Die Arbeitsweise von Beispiel 1 wird mit der Abweichung wiederholt, daß Mischungen aus Kaolin und Natriumbentonit mit den in Beispiel 2 bzw. 3 angegebenen Wassergehalten verwendet wurden. Die Mischungsverhältnisse sowie die an den Mischgranulaten gemessenen Wasseraufnahmefähigkeiten sind in Tabelle 2 den rechnerisch zu erwartenden Werten gegenübergestellt.

Aus den in den Tabellen 1 und 2 angegebenen Werten ergibt sich überraschenderweise, daß durch die intensive Verknetung der feuchten Zweischicht- bzw. Erdalkalimetall-Dreischichtsilicate mit Natriumbentonit eine wesentliche Erhöhung der Wasseraufnahmefähigkeit resultiert, die aus der Addition der Wasseraufnahmefähigkeiten der Zweischicht- oder Erdalkalimetall-Dreischichtsilicate und des Natriumbentonits für sich alleine nicht zu erwarten ist. Reiner Calciumbentonit weist, wie aus Beispiel 1 hervorgeht, ein Wasseraufnahmevermögen von etwa 90 % auf; reiner Kaolinit zeigt nach Beispiel 2 eine Wasseraufnahmefähigkeit von etwa 75 %. Die Wasseraufnahmefähigkeit von Natriumbentonit liegt nach Beispiel 3 bei etwa 270 bis 290 %. Durch die Verknetung von Calciumbentonit in verschiedenen Mengenanteilen mit Natriumbentonit ergibt sich, wie das Beispiel 4 zeigt, eine unerwartet hohe Wasseraufnahmefähigkeit, die deutlich über den theoretisch zu erwartenden Werten liegt. Entsprechendes gilt für die Sorptionsmittel aus Kaolin und Natriumbentonit nach Beispiel 5.

Tabelle 1

| Knetmischungen von Calcium- mit Natriumbentonit | | | |
|---|---|---|---|
| Bezeichnung | Mischungsverhältnis Ca-B. / Na-B. | Wasseraufnahmefähigkeit | |
| | | gemessen | berechnet |
| Granulat 1 | 90 : 10 | 113 | 112 |
| Granulat 2 | 70 : 30 | 211 | 152 |
| Granulat 3 | 50 : 50 | 249 | 192 |

Tabelle 2

| Knetmischungen von Kaolin mit Natriumbentonit | | | |
|---|---|---|---|
| Bezeichnung | Mischungsverhältnis Kaolin / Na-B. | Wasseraufnahmefähigkeit | |
| | | gemessen | berechnet |
| Granulat 1 | 90 : 10 | 135 | 94 |
| Granulat 2 | 70 : 30 | 202 | 134 |
| Granulat 3 | 50 : 50 | 233 | 174 |
| Granulat 4 | 30 : 70 | 270 | 213 |

**Patentansprüche**

1. Verfahren zur Herstellung von Sorptionsmitteln auf Smektitbasis zur Aufnahme von Flüssigkeiten, dadurch gekennzeichnet, daß man

   (a) einen Smektit mit einer Wasseraufnahmefähigkeit von weniger als 115 % (bezogen auf den getrockneten Smektit mit einem Restwassergehalt von 6 Gew.-%) und einem Smektitgehalt von etwa 40 bis 65 Gew.-% und/oder

   (b) ein Zweischichtsilicat

   im feuchten Zustand mit einem Alkalismektit durch intensive Scherung vermischt und homogenisiert, die Mischung schonend trocknet und die getrocknete Mischung zerkleinert.

2. Verfahren nach Anspruch 1, dadurch gekennzeichnet, daß man die Verknetung bei einer Energieaufnahme von etwa 2 bis 10, vorzugsweise 3 bis 6 kWh/to Knetgemisch, durchführt.

3. Verfahren nach Anspruch 1 oder 2, dadurch gekennzeichnet, daß man das zu trocknende Material mit nicht mehr als 150°C, vorzugsweise mit nicht mehr als 120°C belastet und den Restwassergehalt nicht unter 4 Gew.-%, vorzugsweise nicht unter 6 Gew.-% einstellt.

4. Verfahren nach einem der Ansprüche 1 bis 3, dadurch gekennzeichnet, daß man von einem Erdalkali-Smektit, insbesondere von einem Ca-Smektit mit einer Wasseraufnahmefähigkeit (bezogen auf den getrockneten Smektit mit einem Restwassergehalt von 6 Gew.-%) von mindestens etwa 50 %, vorzugsweise von 60 bis 130 %, insbesondere von 90 bis 120 %, ausgeht.

5. Verfahren nach einem der Ansprüche 1 bis 4, dadurch gekennzeichnet, daß man von einem Zweischichtsilicat aus der Gruppe der Kaoline ausgeht, welches eine Wasseraufnahmefähigkeit von etwa 40 bis 80 Gew.-% (bezogen auf den getrockneten Kaolin mit einem Restwassergehalt von 6 Gew.-%) aufweist.

6. Verfahren nach einem der Ansprüche 1 bis 5, dadurch gekennzeichnet, daß man einen Alkalismektit verwendet, der überwiegend Na-Ionen als austauschbare Kationen enthält und der eine Wasseraufnahmefähgikeit von mindestens etwa 200 % (bezogen auf einen Restwassergehalt von 6 Gew.-%) aufweist.

7. Verfahren nach einem der Ansprüche 1 bis 6, dadurch gekennzeichnet, daß das Mischungsverhältnis zwischen dem schwach quellenden Smektit und/oder dem Zweischichtsilicat einerseits und dem Alkalismektit etwa 9:1 bis 1:9, insbesondere 7:3 bis 3:7 beträgt.

8. Verfahren nach einem der Ansprüche 1 bis 7, dadurch gekennzeichnet, daß man die Ausgangsmaterialien bei einem Wassergehalt von etwa 20 bis 40 % in einem scherenden Aggregat intensiv verknetet oder in einem schnell-laufenden Mischaggregat durch intensive Scherung vermischt und homogenisiert.

9. Verfahren nach einem der Ansprüche 1 bis 8, dadurch gekennzeichnet, daß man das getrocknete Produkt auf eine Korngröße von etwa 0,1 bis 10 mm, vorzugsweise von 1 bis 5 mm einstellt.

10. Sorptionsmittel, das nach dem Verfahren nach einem der Ansprüche 1 bis 9 erhältlich ist und das durch einen Wassergehalt von etwa 3 bis 12, vorzugsweise von 4 bis 10 % (nach dem Trocknen) und eine Wasseraufnahmefähigkeit von mehr als 120 %, vorzugsweise von mehr als 150 % (bezogen auf das bis auf einen Restfeuchtigkeitsgehalt von 6 Gew.-% getrocknete Material) gekennzeichnet ist.

11. Sorptionsmittel nach Anspruch 10, dadurch gekennzeichnet, daß es mit an sich bekannten Sorptionsmitteln, z.B. mit organischen Sorptionsmitteln, verschnitten ist.

12. Sorptionsmittel nach Anspruch 10 oder 11, dadurch gekennzeichnet, daß es Weißpigmente, Desinfektionsmittel und/oder Tierakzeptanzien enthält.

13. Verwendung des Sorptionsmittels nach einem der Ansprüche 9 bis 11 als Packungsmaterial, Aufsaugmittel für Flüssigkeiten sowie als Streumaterial für Heimtiere, insbesondere als Katzenstreu.

**Claims**

1. A process for the production of sorbents based on smectite for uptake of liquids, characterized by mixing

   a) a smectite with a water uptake capacity of less than 115% (in terms of the dried smectite with a residual water content of 6 wt.%) and a smectite content of about 40 to 65 wt.%, and/or

   b) a two-layer silicate

   with an alkali metal smectite in moist condition by intensive shearing and homogenizing, gently drying the mixture and fragmenting the dried mixture.

2. The process of Claim 1, characterized in that the kneading is done with an energy consumption of about 2-10, preferably 3-6 kWh/ton of the kneading mixture.

3. The process of Claims 1 or 2, characterized in that the material to be dried is exposed to not more than 150°C, preferably to not more than 120°C, and the residual water content is adjusted to not less than 4 wt.%, preferably not less than 6 wt.%.

4. The process according to any one of Claims 1-3, characterized in that the starting material is an alkaline earth smectite, especially a Ca-smectite which has a water uptake capacity of at least about 50%, preferably of 60-130%, in particular of 90-120% (based on the dried smectite with a residual water content of 6 wt.%).

5. The process according to any one of Claims 1-4, characterized in that the starting material is a two-layer silicate from the group of the kaolins which has a water uptake capacity of about 40-80 wt.% (based on the dried kaolin with a residual water content of 6 wt.%).

6. The process according to anyone of Claims 1-5, characterized in that an alkali metal smectite is used which predominantly contains an Na-ions as exchangeable cations and which has a water uptake capacity of at least about 200 % (based on a residual water content of 6wt.%).

7. The process according to any one of Claims 1-6, characterized in that the mix ratio between the weakly swelling smectite and/or the two-layer silicate, on the one hand, and the alkali metal smectite is about 9:1 to 1:9, in particular 7:3 to 3:7.

8. The process according to any one of Claims 1-7, characterized in that the starting materials are intensively kneaded in a shearing aggreagate at a water content of about 20-40%, or are mixed and homogenized in a fast-running mixing aggregate.

9. The process according to any one of claims 1-8, characterized in that the dried product is adjusted to a grain size of about 0.1-10 mm, preferably from 1-5 mm.

10. The sorbent which is obtainable by the process according to any one of Claims 1-9 and which is characterized by a water-content of about 3-12, preferably from 4-10% (after drying) and a water uptake capacity of more than 120%, preferably of more than 150% (based on the material dried to a residual moisture content of 6 wt.%).

11. The sorbent according to Claim 10, characterized in that it is blended with known sorbents, e.g. with organic sorbents.

12. The sorbent according to Claims 10 or 11, characterized in that it contains white pigments, disinfectants and/or animal acceptance agents.

13. The use of a the sorbent according to any one of Claims 9-11 as packaging material, sorbent for liquids and as litter for pets, especially as cat litter.

**Revendications**

1. Procédé de préparation d'agents de sorption à base de smectite pour l'absorption de liquides, caractérisé en ce que l'on mélange et l'on homogénéise :

   (a) une smectite ayant une capacité d'absorption d'eau de moins de 115 % (rapporté à la smectite séchée ayant une teneur en eau résiduelle de 6 % en poids) et une teneur en smectite d'environ 40 à 65 % en poids et/ou
   (b) un silicate à deux couches réticulaires

   à l'état humide, avec une smectite alcaline, par cisaillement intensif, on sèche soigneusement le mélange, puis on broie le mélange séché.

2. Procédé selon la revendication 1, caractérisé en ce que l'on effectue le malaxage par une absorption d'énergie d'environ 2 à 10, de préférence 3 à 6 kWh/t de mélange malaxé.

3. Procédé selon la revendication 1 ou 2, caractérisé en ce que l'on charge le matériau à sécher, à une température ne dépassant pas 150° C, de préférence ne dépassant pas 120° C, la teneur en eau résiduelle n'étant pas inférieure à 4 % en poids, de préférence pas inférieure à 6 % en poids.

4. Procédé selon l'une quelconque des revendications 1 à 3, caractérisé en ce que l'on part d'une smectite alcalino-terreuse, particulièrement d'une smectite-Ca, ayant une capacité d'absorption d'eau (rapportée à la smectite séchée ayant une teneur en eau résiduelle de 6 % en poids) d'au moins environ 50 %, de préférence de 60 à 130 %, particulièrement de 90 à 120 %.

5. Procédé selon l'une quelconque des revendications 1 à 4, caractérisé en ce que l'on part d'un silicate à deux couches réticulaires du groupe des kaolins qui possède une capacité d'absorption d'eau d'environ 40 à 80 % en poids (rapporté au kaolin séché ayant une teneur en eau résiduelle de 6 % en poids).

6. Procédé selon l'une quelconque des revendications 1 à 5, caractérisé en ce que l'on utilise une smectite alcaline qui contient essentiellement des ions Na en tant que cations échangeables et qui possède une capacité d'absorption d'eau d'au moins environ 200 % (rapporté à la teneur en eau résiduelle de 6 % en poids).

7. Procédé selon l'une quelconque des revendications 1 à 6, caractérisé en ce que le rapport du mélange entre la smectite faiblement gonflante et/ou le silicate à deux couches réticulaires d'un côté, et la smectite alcaline, s'élève à environ 9:1 à 1:9, particulièrement 7:3 à 3:7.

8. Procédé selon l'une quelconque des revendications 1 à 7, caractérisé en ce que l'on malaxe intensivement les matières de départ dans un bloc de cisaillement, ou dans un mélangeur rapide, par cisaillement intensif jusqu'à une teneur en eau d'environ 20 à 40 %.

9. Procédé selon l'une quelconque des revendications 1 à 8, caractérisé en ce que l'on ajuste le produit séché à une grosseur de grain d'environ 0,1 à 10 mm, de préférence. de 1 à 5 mm.

10. Agent de sorption selon l'une quelconque des revendications 1 à 9 du procédé, caractérisé par une teneur en eau d'environ 3 à 12, de préférence de 4 à 10 % (après le séchage) et par une capacité d'absorption d'eau de plus de 120 %, de préférence de plus de 150 % (rapporté au matériau séché jusqu'à une teneur en humidité résiduelle de 6 % en poids).

**11.** Agent de sorption selon la revendication 10, caractérisé en ce qu'on le dilue avec,des agents de sorption connus, par exemple avec des agents de sorption organiques.

**12.** Agent de sorption selon la revendication 10 ou 11, caractérisé en ce qu'il contient des pigments blancs, des agents de désinfection et/ou des agents tolérés par les animaux.

**13.** Utilisation de l'agent de sorption selon l'une quelconque des revendications 9 à 11 comme matériau d'emballage, agent d'absorption de liquides ainsi que comme matériau de litière pour animaux domestiques, particulièrement comme litière pour chats.